# EUROPÄISCHE PATENTSCHRIFT

(11) **EP 4 097 010 B1**
(45) Veröffentlichungstag und Bekanntmachung des Hinweises auf die Patenterteilung: **27.11.2024**
(21) Anmeldenummer: 21701287.1
(22) Anmeldetag: 20.01.2021
(51) Int. Cl.: B64G 1/64, B64G 1/22

(54) **AKTUATORMODUL ZUM FREISETZEN EINER AUSRÜSTUNGSKOMPONENTE**
ACTUATOR MODULE FOR RELEASING AN EQUIPMENT COMPONENT
MODULE D'ACTIONNEMENT POUR LIBÉRER UN COMPOSANT D'ÉQUIPEMENT

(30) Priorität: 31.01.2020 DE 102020000688
(43) Veröffentlichungstag der Anmeldung: 07.12.2022
(73) Patentinhaber: Dcubed GmbH, 82110 Germering (DE)
(72) Erfinder: SINN, Thomas, 82110 Germering (DE); PIETRAS, Markus, 82110 Germering (DE); LUND, Thomas, 82110 Germering (DE); TITZ, Alexander, 82110 Germering (DE)
(74) Vertreter: Schott, Jakob Valentin
(86) Internationale Anmeldenummer: PCT/EP2021/051103
(87) Internationale Veröffentlichungsnummer: WO 2021/151732

(56) Entgegenhaltungen:
- KR-A- 20120 009 568
- US-A- 5 129 753
- US-A1- 2019 308 754
- US-B1- 6 450 725

## Beschreibung

Die Erfindung betrifft ein Aktuatormodul zur Freisetzung einer Ausrüstungskomponente. Die Ausrüstungskomponente kann eine Ausrüstungskomponente eines Satelliten sein, beispielsweise eine entfaltbare, aufblasbare und/oder ausfahrbare Komponente des Satelliten, wie beispielsweise ein Solarpanel, eine Antenne oder ein Bremsschirm. Die Ausrüstungskomponente kann eine Ausrüstungskomponente einer sub- oder orbitalen Plattform wie einer Rakete sein, insbesondere ein abzutrennender oder zu bewegender Raketenbauteil oder ein freizugebender Satellit. Gattungsgemäße Aktuatormodule sind zum Beispiel aus der KR 2012 0009568 A, der US 6 450 725 B1 und der US 2019/308754 A1 bekannt.

Das hier beschriebene Aktuatormodul umfasst eine Modulbasis, wobei die Modulbasis eine Führungshülse bildet. Die Führungshülse hat beispielsweise im Wesentlichen die Form eines allgemeinen Zylinders mit axialer Durchgangsbohrung, beispielsweise die Form eines Hohlzylinders.

Das Aktuatormodul umfasst ferner einen zur Kopplung mit der Ausrüstungskomponente vorgesehenen, in die Führungshülse eingesetzten Freisetzungskörper, welcher relativ zu der Führungshülse längs einer Hülsenachse derselben aus einer Bereitschaftsposition in eine Arbeitsposition beweglich angeordnet ist, wobei der Freisetzungskörper in der Bereitschaftsposition unter der Wirkung einer den Freisetzungskörper in Richtung auf die Arbeitsposition drängenden ersten Federvorspannung steht und durch Überführung aus der Bereitschafts- in die Arbeitsposition eine Freisetzung der Ausrüstungskomponente zu bewirken vermag. Der Freisetzungskörper ist beispielsweise im Wesentlichen zylinderförmig.

Darüber hinaus umfasst das Aktuatormodul einen auf die Führungshülse aufgesetzten, relativ zu dieser zwischen einer Blockierstellung und einer Freigabestellung beweglichen Blockierkörper, welcher in seiner Blockierstellung eine Blockierung des Freisetzungskörpers gegen Bewegung aus der Bereitschaftsposition in die Arbeitsposition bewirkt und in seiner Freigabestellung eine Bewegung des Freisetzungskörpers aus der Bereitschaftsposition in die Arbeitsposition gestattet, wobei der Blockierkörper in seiner Blockierstellung unter der Wirkung einer zweiten Federvorspannung steht, welche den Blockierkörper in Richtung aus der Freigabestellung hin zu der Blockierstellung drängt. Der Blockierkörper hat beispielsweise im Wesentlichen die Form eines allgemeinen Zylinders mit axialer Durchgangsbohrung, beispielsweise die Form eines Hohlzylinders. Der Blockierkörper kann so auf die Führungshülse aufgesetzt sein, dass er diese zumindest teilweise, vorzugsweise komplett in Umfangsrichtung umschließt.

Ferner umfasst das Aktuatormodul eine Aktuatoreinrichtung zur Bewegung des Blockierkörpers aus der Blockierstellung in die Freigabestellung, wobei die Aktuatoreinrichtung mindestens einen mit beiden Drahtenden an der Modulbasis festgelegten, mit dem Blockierkörper für die Aufbringung einer der zweiten Federvorspannung entgegenwirkenden Aktivierungskraft gekoppelten Aktuatordraht aus einem Formgedächtnismaterial umfasst.

Das Formgedächtnismaterial ist eingerichtet, sich bei einer Aktuierung zusammenzuziehen. Vorzugsweise handelt es sich bei dem Formgedächtnismaterial um eine Formgedächtnislegierung, die sich beim Erhitzen zumindest in Längsrichtung des Aktuatordrahts zusammenzieht. Das Erhitzen kann durch ohmsche Wärme erreicht werden, indem der elektrisch leitfähige Aktuatordraht mit einer bestimmten elektrischen Leistung versorgt wird.

Aus dem Stand der Technik sind Aktuatormodule zur Freisetzung von Ausrüstungskomponenten bekannt. Diese haben jedoch häufig den Nachteil, dass sie baugrößenbedingt ein großes Volumen einnehmen. Ferner weisen die bekannten Aktuatormodule häufig ein hohes Gewicht auf. Oftmals sind die bekannten Aktuatormodule nur zur einmaligen Aktuierung konzipiert, sodass ein mehrfaches Testen der Aktuierung desselben Aktuatormoduls zur Sicherstellung von dessen zuverlässiger Funktion nicht möglich ist.

Um eine unbeabsichtigte Bewegung des Freisetzungskörpers aus der Bereitschaftsposition in die Arbeitsposition zu verhindern, ist es vorteilhaft, eine unbeabsichtigte Bewegung des Blockierkörpers aus der Blockierstellung in die Freigabestellung zu vermeiden. Hierzu sollte die zweite Federvorspannung und/oder der zur Bewegung des Blockierkörpers aus der Blockierstellung in die Freigabestellung benötigte Stellweg möglichst groß gewählt werden.

Um eine zuverlässige Bewegung des Freisetzungskörpers aus der Bereitschaftsposition in die Arbeitsposition zu ermöglichen, muss sichergestellt sein, dass die Aktuatoreinrichtung den Blockierkörper entgegen der zweiten Federvorspannung bewegen kann. Eine große Stellkraft der Aktuatoreinrichtung ist daher von Vorteil. Gleichzeitig muss sichergestellt sein, dass die Aktuatoreinrichtung den benötigten Stellweg zuverlässig erreicht. Ein großer Stellweg der Aktuatoreinrichtung ist daher ebenfalls vorteilhaft.

Der Blockierkörper ist relativ zu der Führungshülse axial zwischen seiner Blockierstellung und seiner Freigabestellung beweglich angeordnet, und der Aktuatordraht mit einem axialen Auf- und Ab um die Führungshülse herum geführt, wobei der Aktuatordraht an dem Blockierkörper und der Modulbasis abgestützt ist. Der Aktuatordraht kann mit einem mehrfachen axialen Auf- und Ab um die Führungshülse herum geführt sein, wobei der Aktuatordraht abwechselnd an dem Blockierkörper und der Modulbasis abgestützt ist. Beispielsweise ist der Aktuatordraht auch um den auf die Führungshülse aufgesetzten Blockierkörper herum geführt.

Somit verläuft der Aktuatordraht in Bezug auf die Bewegungsrichtung des Blockierkörpers schräg. Der Draht kann dabei mehrere im Wesentlichen geradlinige, an einander anschließende Abschnitte umfassen, wobei jeder dieser Abschnitte schräg zu der Bewegungsrichtung des Blockierkörpers verläuft. Der schräge Verlauf ermöglicht eine Stellwegverstärkung: Bei einer Kontraktion des Aktuatordrahts um eine bestimmte Länge kann der Blockierkörper um einen Stellweg bewegt werden, der größer ist als die bestimmte Länge. Auch wird durch das Umlaufen des Aktuatordrahts um die Führungshülse eine große Länge der einzelnen Abschnitte des Aktuatordrahts erreicht. Es ergibt sich also auch ein großer Stellweg der Aktuatoreinrichtung.

Ferner kommt es durch diesen Verlauf des Aktuatordrahts zu einer Kraftverteilung auf einzelne Abschnitte des Aktuatordrahts, die vorzugsweise jeweils zwischen dem Blockierkörper und der Modulbasis verlaufen: Die zur Bewegung des Blockierkörpers von dem Aktuatordraht auf den Blockierkörper ausgeübte Kraft setzt sich als Summe aus den einzelnen Kräften zusammen, die von den Abschnitten des Aktuatordrahts auf den Blockierkörper ausgeübt werden. Somit kann von dem Aktuatordraht insgesamt eine hohe Kraft als Stellkraft auf den Blockierkörper ausgeübt werden.

Der Blockierkörper kann eine Mehrzahl von mindestens und vorzugsweise insgesamt zwei in Umfangsrichtung im Wesentlichen gleichverteilt angeordneten Drahtführungsformationen für den Aktuatordraht aufweisen. Der Aktuatordraht steigt beispielsweise in Umfangsrichtung beidseits jeder der Drahtführungsformationen zu axial tiefer an der Modulbasis gelegenen Drahtabstützstellen ab, vorzugsweise schräg in Bezug auf die axiale Richtung und/oder in Bezug auf eine Bewegungsrichtung des Blockierkörpers.

Die Modulbasis kann eine Mehrzahl von mindestens und vorzugsweise insgesamt zwei in Umfangsrichtung der Führungshülse im Wesentlichen gleichverteilt angeordneten Drahtabstützstellen für den Aktuatordraht aufweisen. Die Drahtabstützstellen liegen vorzugsweise radial außerhalb des Blockierkörpers. Der Aktuatordraht steigt beispielsweise in Umfangsrichtung beidseits jeder der Drahtabstützstellen zu axial höher an dem Blockierkörper gelegenen Drahtführungsformationen an, vorzugsweise schräg in Bezug auf die axiale Richtung und/oder in Bezug auf eine Bewegungsrichtung des Blockierkörpers. Beispielsweise werden die Drahtabstützstellen durch Befestigungselemente gebildet, die an der Modulbasis angebracht sind. Die Anzahl der Drahtabstützstellen entspricht vorzugsweise der Anzahl der Drahtführungsformationen.

In einer axialen Draufsicht kann der Aktuatordraht im Wesentlichen den Kanten eines Polygons folgen. Stellen des Aktuatordrahts, die an benachbarten, von derselben Kante gebildeten Ecken des Polygons liegen, sind zumindest axial voneinander beabstandet. Das Polygon kann ein konvexes und/oder gleichseitiges Polygon sein. Das Polygon ist vorzugsweise eine Raute, insbesondere ein Quadrat.

Hierdurch wird eine gleichmäßige Krafteinwirkung auf den Blockierkörper ermöglicht, sodass bei einer Aktuierung des Aktuatordrahts im Wesentlichen nur eine den Blockierkörper von der Blockierstellung in Richtung der Freigabestellung treibende Kraft auf den Blockierkörper wirkt. Somit werden Reibungskräfte zwischen dem Blockierkörper und der Führungshülse verringert und eine große Stellkraft der Aktuatoreinrichtung ermöglicht. Darüber hinaus wird ein kompakter Aufbau des Aktuatormoduls bei gleichzeitig möglichst großer Länge der einzelnen Abschnitte des Aktuatordrahts zur Sicherstellung eines großen Stellwegs ermöglicht.

Beispielsweise umfasst die Modulbasis eine Grundplatte mit zumindest angenähert polygonförmigem Umriss, und mindestens eines der Drahtenden des Aktuatordrahts ist in axialer Draufsicht im Bereich einer der Ecken des Umrisses an der Modulbasis festgelegt, beispielsweise an einer der oben beschriebenen Drahtabstützstellen oder Befestigungselemente. Beispielsweise steht die Führungshülse im Wesentlichen plattenmittig von der Grundplatte auf bzw. ab. Der Umriss ist vorzugsweise zumindest angenähert ein konvexes und/oder gleichseitiges Polygon. Das Polygon kann eine Raute oder ein Quadrat sein. Es können auch beide Drahtenden des Aktuatordrahts in axialer Draufsicht im Bereich derselben Ecke des Umrisses an der Modulbasis festgelegt sein.

Hierdurch wird eine möglichst große Länge des Aktuatordrahts, also ein großer Stellweg der Aktuatoreinheit, bei gleichzeitig kompaktem Aufbau des Aktuatormoduls ermöglicht. Auch wird ein Anschluss von elektrischen Leitungen zur Aktuierung der Aktuatoreinheit an derselben Ecke ermöglicht, was den Einbau und die elektrische Kontaktierung des Aktuatormoduls auch in schwer zugänglichen Bereichen wie einem Kleinstsatelliten (sogenannten "CubeSats") erleichtert.

Beispielsweise ist der Aktuatordraht einadrig ausgestaltet und im Bereich wenigstens eines seiner Drahtenden in das Aderbündel eines der elektrischen Versorgung des Aktuatordrahts dienenden Litzendrahts eingesteckt, wobei der Aktuatordraht mittels einer auf das Aderbündel aufgesetzten Klemmhülse mit dem Litzendraht zugkraftübertragend verklemmt ist.

Alternativ kann der Aktuatordraht einadrig ausgestaltet und im Bereich wenigstens eines seiner Drahtenden mittels einer auf einen der elektrischen Versorgung des Aktuatordrahts dienenden Anschlusspin aufgesetzten Klemmhülse mit dem Anschlusspin zugkraftübertragend und/oder zugfest verklemmt sein. Beispielsweise ist auch in diesem Fall im Bereich der Klemmhülse ein das Drahtende umgebendes Faserbündel angeordnet, wobei das Faserbündel ein elektrisch leitfähiges Aderbündel ist. Der Anschlusspin kann zum direkten Anschluss an eine elektrische Leiterplatte oder einen Anschlussstecker ausgebildet sein. Die Klemmhülse kann mit dem Anschlusspin einstückig gefertigt sein.

Durch die Klemmhülse wird beispielsweise eine Verbindung des Crimp-Typs gebildet. Vorzugsweise ist die Klemmhülse zumindest von vier Richtungen her mit dem Litzendraht bzw. dem Faserbündel und dem Aktuatordraht verpresst. Hierzu wird ein Werkzeug mit einem Vierdornprofil verwendet, um vier Crimp-Stempel gleichmäßig auf die Klemmhülse zu pressen, wobei das Litzenmaterial bzw. das Faserbündelmaterial gleichmäßig verdrängt und ein hoher Verpressungsgrad sichergestellt wird. Die Klemmhülse kann auch von einer, zwei, drei, fünf oder mehr Richtungen her mit dem Litzendraht bzw. dem Fasebündel und dem Aktuatordraht verpresst sein. In diesem Fall kann ein entsprechendes Crimpwerkzeug zum Verpressen der Klemmhülse verwendet werden.

Die Klemmhülse ist vorzugsweise an der Modulbasis festgelegt, beispielsweise an einem der oben beschriebenen Drahtabstützstellen und/oder an einem auf der Grundplatte der Modulbasis angeordneten Befestigungselement.

Hierdurch wird eine elektrische Kontaktierung des Aktuatordrahts bei gleichzeitiger Fixierung desselben sichergestellt. Diese Art der Verbindung ist außerdem sehr platzsparend, sodass eine geringe Baugröße des Aktuatormoduls ermöglicht wird. Nicht zuletzt wird durch diese Art der Verbindung das Risiko eines Reißens des Aktuatordrahts minimiert.

Zumindest der Aktuatordraht und die Klemmhülse können von einer durchgängigen elektrischen Isolierschicht umschlossen sein. Die Isolierschicht umschließt vorzugsweise auch zumindest einen Teil des Litzendrahts. Beispielsweise werden der Aktuatordraht und die Klemmhülse von einem Schlauch aus Isolationsmaterial wie Polytratrafluorethylen, PTFE, als Isolierschicht umgeben. Der Schlauch kann ein Schrumpfschlauch sein. Zur Bildung der Isolierschicht kann alternativ oder zusätzlich zu dem Schlauch eine Beschichtung wie z.B. Emaille auf zumindest den Aktuatordraht und die Klemmhülse aufgebracht werden.

An der Klemmhülse kann ein Arretierkörper angeordnet sein, der dazu eingerichtet ist, die Klemmhülse an der Modulbasis zumindest in Richtung des Aktuatordrahts zugfest zu befestigen. Der Arretierkörper kann vor oder nach Anbringung der Isolierschicht durch Vergießen oder Ankleben mit der Klemmhülse verbunden werden.

Dies ermöglicht eine platzsparende Ausgestaltung des Aktuatormoduls und eine zuverlässige elektrische Isolierung des Aktuatordrahts. Auch wird eine unbeabsichtigte Aktuation des Aktuatordrahts durch Kurzschluss- oder Leckstrom unterbunden, was die Zuverlässigkeit der Aktuation erhöht. Nicht zuletzt wird durch die zugsichere Verbindung mittels des Arretierkörpers die Zuverlässigkeit des Aktuationselements gewährleistet.

Beispielsweise ist in der Hülsenwand der Führungshülse ein Durchgangsloch für eine Sperrkugel gebildet, welche in der Blockierstellung des Blockierkörpers radial einwärts über die Innenumfangsfläche der Führungshülse hinaussteht, um den Freisetzungskörper gegen Bewegung aus der Bereitschaftsposition in die Arbeitsposition zu blockieren, wobei in der Freigabestellung des Blockierkörpers die Sperrkugel für eine Verlagerung aus dem axialen Bewegungsbereich des Freisetzungskörpers heraus freigegeben ist und der Freisetzungskörper mit einer axialen Tasche ausgeführt ist, in welche ein zur Erzeugung der ersten Federvorspannung dienendes Federelement eingesetzt ist, wobei der Freisetzungskörper in seiner Arbeitsposition mit der radial äußeren Taschenwand der Tasche radial vor der Sperrkugel liegt.

Hierdurch kann ein kompakter Aufbau des Aktuatormoduls erreicht werden. Gleichzeitig wird eine Entkopplung der ersten Federvorspannung von der zweiten Federvorspannung erreicht, was den Einsatz einer großen ersten Federvorspannung ermöglicht, die sogar größer sein kann als die Stellkraft der Aktuatoreinheit.

Vorzugsweise ist die Sperrkugel dazu ausgebildet, in der Freigabestellung des Blockierkörpers radial auswärts über die Außenumfangsfläche der Führungshülse hinauszustehen, um den Blockierkörper gegen Bewegung aus der Freigabestellung in die Blockierstellung zu blockieren, wenn der Freisetzungskörper in seiner Arbeitsposition mit der radial äußeren Taschenwand der Tasche radial vor der Sperrkugel liegt. Ferner ist das Blockierelement in einem Beispiel derart ausgestaltet, dass es in der Freigabestellung von der zweiten Federvorspannung getrieben eine radial einwärts auf die Sperrkugel wirkende Kraft bewirkt. Der Festsetzungskörper ist dahingegen vorzugsweise derart ausgestaltet, dass er in der Bereitschaftsposition von der ersten Federvorspannung getrieben eine radial auswärts auf die Sperrkugel wirkende Kraft bewirkt.

So kann der Freisetzungskörper manuell entgegen der ersten Federvorspannung von der Arbeitsposition zurück in die Bereitschaftsposition bewegt werden. Die Sperrkugel kann dann von dem Blockierkörper radial einwärts getrieben werden, sodass sie wieder radial einwärts über die Innenumfangsfläche der Führungshülse hinaussteht. Diese Verlagerung der Sperrkugel ermöglicht gleichzeitig eine Bewegung des Blockierkörpers von der Freigabestellung in die Blockierstellung durch die zweite Federvorspannung.

Hierdurch wird erreicht, dass das Aktuatormodul auf einfache Weise zurückgesetzt werden kann, was ein Testen der Funktion des Aktuatormoduls vor einem Einbau in einen Satelliten oder eine Plattform bzw. Rakete ermöglicht und dadurch die Zuverlässigkeit des eingebauten Aktuatormoduls erhöht.

Das Aktuatormodul kann ein Gehäuse umfassen. Das Gehäuse umhaust vorzugsweise zumindest den Freisetzungskörper, den Blockierkörper und den Aktuatordraht. Das Gehäuse ist vorzugsweise an der Modulbasis befestigt.

Das Gehäuse kann so ausgestaltet sein, dass es die Blockierstellung und/oder die Freigabestellung des Blockierkörpers festlegt. Hierzu kann das Gehäuse so ausgestaltet sein, dass es eine Bewegung des Blockierkörpers in axialer Richtung begrenzt. Das Gehäuse kann ferner so ausgestaltet sein, dass es eine Bewegung des Blockierkörpers in einer der axialen Richtung gegengesetzten Richtung begrenzt. Zusätzlich oder alternativ kann das Gehäuse so ausgestaltet sein, dass es eine Rotationsbewegung des Blockierkörpers um die Führungshülsenachse in einer oder beiden Richtungen begrenzt.

Das Gehäuse kann so ausgestaltet sein, dass es die Bereitschaftsposition und/oder die Arbeitsposition des Freisetzungskörpers festlegt. Hierzu kann das Gehäuse so ausgelegt sein, dass es eine Bewegung des Freisetzungskörpers in axialer Richtung begrenzt. Das Gehäuse kann ferner so ausgestaltet sein, dass es eine Bewegung des Freisetzungskörpers in einer der axialen Richtung gegengesetzten Richtung begrenzt.

Alternativ oder zusätzlich kann die Modulbasis, beispielsweise die Grundplatte oder die Führungshülse, so ausgestaltet sein, dass sie die Bereitschaftsposition und/oder die Arbeitsposition des Freisetzungskörpers festlegt. Hierzu kann die Modulbasis so ausgestaltet sein, dass sie eine Bewegung des Freisetzungskörpers in der axialen Richtung begrenzt. Die Modulbasis kann ferner so ausgestaltet sein, dass sie eine Bewegung des Freisetzungskörpers in einer der axialen Richtung gegengesetzten Richtung begrenzt.

Das Gehäuse bzw. die Modulbasis weist gemäß diesen Beispielen nicht nur eine Schutzfunktion der einzelnen Bauteile auf, sondern auch eine die Bewegung der Bauteile begrenzende Funktion. Hierdurch wird der Einsatz weiterer Bauteile vermieden und es kann ein kompakter Aufbau des Aktuatormoduls gewährleistet werden.

Die Erfindung wird nachfolgend anhand der beigefügten Zeichnungen weiter erläutert. Es stellen dar:
- Fig. 1: eine perspektivische Ansicht eines Aktuatormoduls vor der Aktuierung,
- Fig. 2: eine Seitenansicht des Aktuatormoduls aus Fig. 1,
- Fig. 3: ein Schnittbild in einer Ebene A des Aktuatormoduls aus Fig. 1,
- Fig. 4: ein Schnittbild in einer orthogonal zur Ebene A verlaufenden Ebene B des Aktuatormoduls aus Fig. 1,
- Fig. 5: eine perspektivische Ansicht des Aktuatormoduls nach der Aktuierung,
- Fig. 6: ein Schnittbild in der Ebene A des Aktuatormoduls aus Fig. 5,
- Fig. 7: ein Schnittbild in der Ebene B des Aktuatormoduls aus Fig. 5,
- Fig. 8: ein Schnittbild in der Ebene B eines Aktuatormoduls vor der Aktuierung,
- Fig. 9: ein Schnittbild in der Ebene B eines Aktuatormoduls vor der Aktuierung,
- Fig. 10: eine perspektivische Ansicht eines Aktuatormoduls vor der Aktuierung,
- Fig. 11: eine perspektivische Ansicht eines Blockierkörpers und einer Aktuatoreinheit des Aktuatormoduls aus Fig. 10,
- Fig. 12: einen Blockierkörper des Aktuatormoduls aus Fig. 10, und
- Fig. 13: eine perspektivische Ansicht des Aktuatormoduls aus Fig. 10.

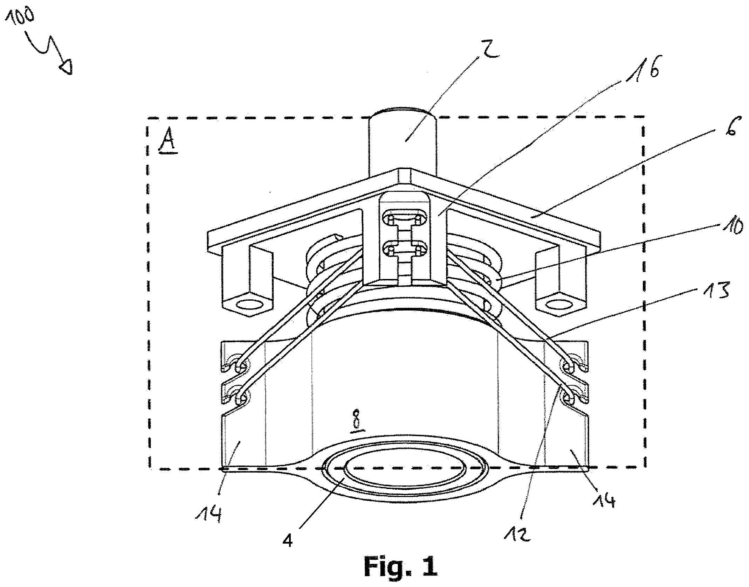

Im Folgenden und in den Fig. 1-13 bezeichnen dieselben Bezugszeichen dieselben strukturellen Merkmale. Es wird zunächst auf die Fig. 1 verwiesen.

Das Aktuatormodul 100 umfasst einen Freisetzungskörper 2, der in eine Führungshülse 4 einer Modulbasis angeordnet ist. Die Modulbasis umfasst ferner eine Grundplatte 6, von welcher die Führungshülse im Wesentlichen orthogonal absteht. Der Freisetzungskörper 2 erstreckt sich durch die Grundplatte 6 zu der der Führungshülse 4 abgewandten Seite der Grundplatte 6.

Fig. 1 zeigt das Aktuatormodul 100 vor der Aktuierung mit dem Freisetzungskörper 2 in einer Bereitschaftsposition. Auf den Freisetzungskörper 2 wirkt eine erste Federvorspannung in axialer Richtung von der Bereitschaftsposition zu einer Arbeitsposition. Das Aktuatormodul 100 ist eingerichtet, nach der Aktuierung den Freisetzungskörper 2 in axialer Richtung der Führungshülse 4 freizugeben, sodass der sich auf der der Führungshülse 4 abgewandten Seite der Grundplatte 6 erstreckende Anteil des Freisetzungskörpers 2 verkleinert wird. In anderen Worten wird durch die Aktuierung des Aktuatormoduls 100 der Freisetzungskörper 2 von der ersten Federvorspannung getrieben in die Führungshülse 4 zurückgezogen. Im zurückgezogenen Zustand befindet sich der Freisetzungskörper in seiner Arbeitsposition. Das Aktuatormodul 100 kann daher auch als "Pin Puller" bezeichnet werden.

Das Aktuatormodul 100 umfasst einen Blockierkörper 8, welcher auf die Führungshülse 4 aufgesetzt ist. Der Blockierkörper 8 ist in axialer Richtung auf der Führungshülse 4 verschiebbar gelagert. Eine Aktuatoreinheit dient dazu, den Blockierkörper 8 in axialer Richtung auf der Führungshülse 4 entgegen einer zweiten Federvorspannung zu bewegen. Die zweite Federvorspannung wird durch das Federelement 10, welches an der Grundplatte 6 und an dem Blockierkörper 8 abgestützt ist, auf den Blockierkörper 8 ausgeübt. In der gezeigten Konfiguration, also vor der Aktuierung des Aktuatormoduls 100, befindet sich der Blockierkörper 8 in einer Blockierstellung. In der Blockierstellung bewirkt der Blockierkörper 8 eine Blockierung des Freisetzungskörpers 2, sodass der Freisetzungskörper 2 nicht in die Führungshülse 4 zurückgezogen werden kann.

Die Aktuatoreinheit umfasst zumindest einen Aktuatordraht 12, welcher mit beiden Enden an der Moduleinheit festgelegt ist. Der Aktuatordraht 12 ist auch an dem Blockierkörper 8 festgelegt. Es ist zu erkennen, dass der Aktuatordraht 12 in einem axialen Auf und Ab um die Führungshülse 4 gelegt ist. Hierbei werden von dem Aktuatordraht 12 mehrere im Wesentlichen geradlinig verlaufende Abschnitte gebildet, die sich jeweils zwischen dem Blockierkörper 8 und der Modulbasis erstrecken. Der Aktuatordraht 12 ist beispielsweise ein Draht aus einer Nickel-TitanLegierung (z.B. Nitinol) und hat in einem Beispiel einen Durchmesser von etwa 0.3 mm. Bei einer Erhitzung des Aktuatordrahts 12 auf eine Transformationstemperatur, die bei etwa 90°C liegen kann, kommt es zu einer Umwandlung der Kristallstruktur, sodass sich der Aktuatordraht 12 zumindest in Längsrichtung zusammenzieht.

An dem Blockierkörper 8 sind zwei in Umfangsrichtung im Wesentlichen gleichförmig angeordnete Drahtführungsformationen 14 angeordnet. Die vorliegend zwei Drahtführungsformationen 14 sind auf gegenüberliegenden Seiten des Blockierkörpers 8 angeordnet und stehen radial von der Außenumfangsfläche des Blockierkörpers 8 ab. Die Grundplatte 6 hat in axialer Draufsicht einen im Wesentlichen quadratischen Umriss. In zwei gegenüberliegenden Ecken des Umrisses sind Drahtabstützstellen gebildet. Insbesondere ist auf der der Führungshülse 4 zugewandten Seite der Grundplatte 6 in nur zwei gegenüberlegenden Ecken des Umrisses der Grundplatte 6 jeweils ein Befestigungselement angeordnet. Jeder der Abschnitte des Aktuatordrahts 12 verläuft zwischen einem Befestigungselement als Drahtabstützstelle und einer Drahtführungsformation 14.

Das Befestigungselement 16, an welchem beide Drahtenden des Aktuatordrahts 12 festgelegt sind, weist eine an einem axialen Ende des Befestigungselements 16 beginnende, im Wesentlichen in radialer Richtung eingebrachte Durchgangsbohrung mit zumindest T-förmigem Grundriss auf, wobei in den kurzen Schenkeln des "T" je ein Drahtende festgelegt ist. Dies ermöglicht ein einfaches Umlegen des Aktuatordrahts 12 um den Blockierkörper 8 und ein Befestigungselement, sowie eine einfache anschließende Befestigung der Drahtenden an dem vorgenannten Befestigungselement 16 mit der Durchgangsbohrung. Die Drahtenden können entlang der Durchgangsbohrung geführt werden und müssen nicht durch ein Befestigungsloch hindurchgefädelt werden. Insbesondere wenn die Drahtenden mittels einer Klemmhülse mit einem der elektrischen Versorgung dienenden Litzendraht verklemmt sind kann ein durch diese Ausgestaltung des Befestigungselements 16 ein einfacher Zusammenbau und eine sichere Fixierung des Aktuatordrahts 12 an dem Befestigungselement 16 sichergestellt werden. Ein Durchmesser der Klemmhülse ist größer als eine Breite des kurzen Schenkels des "T" der Durchgangsbohrung, um eine Fixierung der Klemmhülse an dem Befestigungselement 16 in Zugrichtung des Aktuatordrahts 12 zu gewährleisten.

Die Aktuatoreinheit umfasst einen von dem Aktuatordraht 12 axialen beanstandeten und im Wesentlichen gleichförmig zu dem Aktuatordraht 12 verlaufenden und ebenso festgelegten weiteren Aktuatordraht 13. Der weitere Aktuatordraht 13 ist zur Redundanz vorgesehen. Sollte eine Aktuierung des Aktuatormoduls 100 mittels des Aktuatordrahts 12 fehlschlagen, so kann dennoch eine Bewegung des Blockierkörpers 8 von der Blockierstellung in die Freigabestellung mittels des weiteren Aktuatordrahts 13 bewerkstelligt werden.

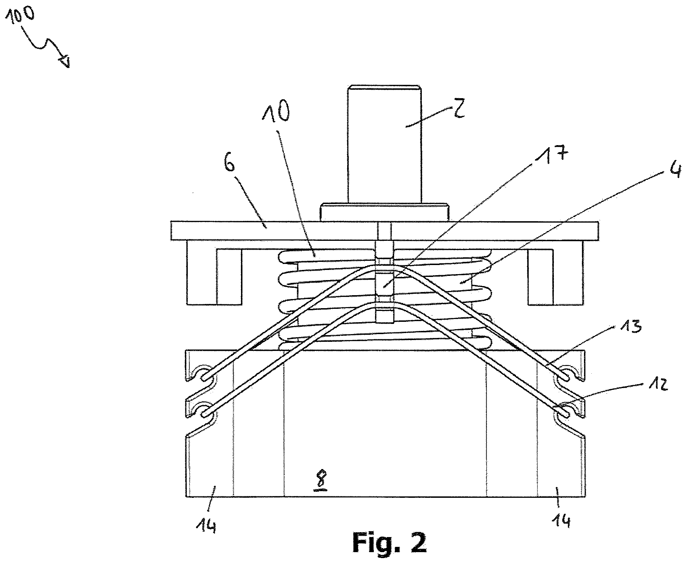

Fig. 2 zeigt eine Seitenansicht des Aktuatormoduls 100 aus Figur 1. Hierbei ist insbesondere der Verlauf des Aktuatordrahts 12 zu erkennen. Die Befestigungspunkte des Aktuatordrahts 12 an der Modulbasis, also die Drahtabstützstellen an den Befestigungselementen, sind axial und in Umlaufrichtung um die Führungshülse 4 von den Befestigungspunkten des Aktuatordrahts 12 an dem Blockierkörper 8 bzw. an den Drahtführungsformationen 14 beanstandet. Das Befestigungselement 17 ist im Wesentlichen gleichartig zu den Drahtführungsformationen 14 ausgestaltet und dient der Umlenkung des Aktuatordrahts 12. Lediglich die axiale Richtung der an den Drahtführungsformationen 14 vorgesehenen Einkerbungen, in welche der Aktuatordraht 12 eingeführt ist, ist gegenläufig zu der axialen Richtung der an dem Befestigungselement 17 vorgesehenen Einkerbungen, in welche der Aktuatordraht 12 eingeführt ist.

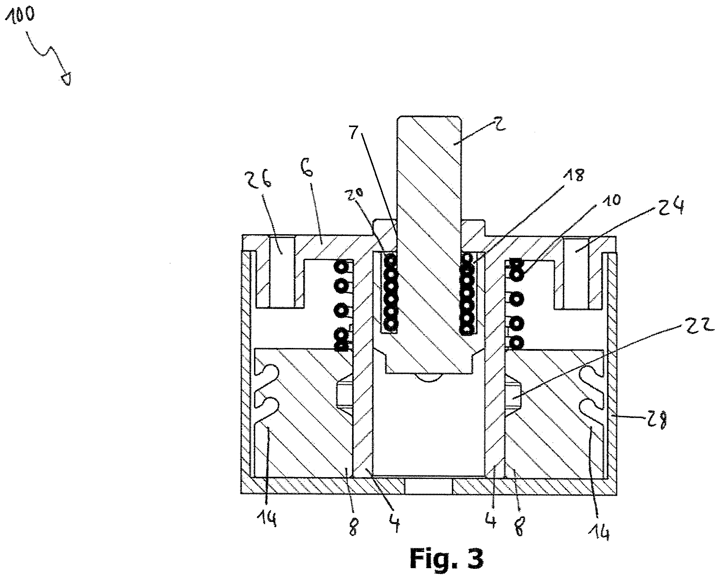

Fig. 3 zeigt eine Schnittansicht des Aktuatormoduls 100 aus Fig. 1 entlang der in Fig. 1 dargestellten Ebene A, in welcher die Führungshülsenachse liegt. Der Übersichtlichkeit halber ist der Aktuatordraht 12 und der weitere Aktuatordraht 13 in dieser Abbildung nicht dargestellt.

Es ist zu erkennen, dass das Federelement 10 an der Grundplatte 6 und an dem Blockierkörper 8 abgestützt ist. Bei dem Federelement 10 handelt es sich um eine Druckfeder, insbesondere eine Schraubenfeder, welche den Blockierkörper 8 aus der Blockierposition von der Grundplatte 6 wegdrängen kann. Das Federelement 10 ist so angeordnet, dass es die Führungshülse 4 vollständig umschließt. Das Federelement übt in einem Beispiel in der Blockierstellung des Blockierkörpers 8 eine zweite Federvorspannung in Höhe von etwa 11 N auf den Blockierkörper 8 aus und in der Freigabestellung des Blockierkörpers 8 eine zweite Federvorspannung in Höhe von etwa 16 N.

Außerdem ist zu erkennen, dass der Freisetzungskörper 2 eine sich in axialer Richtung erstreckende Tasche 18 aufweist. Ein weiteres Federelement 20 ist innerhalb der Tasche 18 angeordnet. Das weitere Federelement 20 ist sowohl an der Grundplatte 6 als auch an einer Stirnfläche der Tasche 18 des Freisetzungskörpers 2 abgestützt und drängt die den Freisetzungskörper 2 weg von der Grundplatte 6, wenn der Freisetzungskörper freigegeben ist. Das weitere Federelement 20 ist als eine Druckfeder, insbesondere eine Schraubenfeder ausgebildet, welche in der Bereitschafsposition des Freisetzungskörpers innerhalb der als Ringtasche geformten Tasche 18 angeordnet ist. Das weitere Federelement 20 übt die erste Federvorspannung auf den Freisetzungskörper 2 aus, welche diesen von der Bereitschaftsposition in Richtung der Arbeitsposition drängen kann, wenn der Blockierkörper diese Bewegung nicht blockiert. In einem Beispiel übt das weitere Federelement 20 in der Bereitschaftsposition des Freisetzungskörpers 2 eine erste Federvorspannung in Höhe von etwa 10 N auf den Freisetzungskörper 2 aus und in der Arbeitsposition des Freisetzungskörpers 2 eine erste Federvorspannung in Höhe von etwa 5 N.

Der Blockierkörper 8 weist an seiner Innenseite, die der Außenwand der Führungshülse 4 zugewandt ist, eine Aussparung 22 auf. Bei dieser kann es sich um eine radial umlaufende Ringnut handeln. In der Grundplatte 6 der Modulbasis sind Aussparungen 24 und 26 vorgesehen, welche der Befestigung des Aktuatormoduls 100 an einer anderen Struktur, beispielsweise an einem Satelliten, dienen.

Außerdem ist ein Gehäuse 28 dargestellt, welches mit der Grundplatte 6 verbunden ist und die Führungshülse 4 und den Blockierkörper 8 einhaust. Das Gehäuse 28 ist so ausgestaltet, dass es sich an einem axialen Ende der Führungshülse 4 zumindest teilweise in radial einwärts über die Innenumfangsfläche der Führungshülse 4 erstreckt, sodass eine maximale Bewegung des Freisetzungskörpers durch das Gehäuse 28 begrenzt wird. Durch das Gehäuse 28 wird also die Arbeitsposition des Freisetzungskörpers 2 festgelegt. Ferner ist zu erkennen, dass das Gehäuse 28 so ausgebildet wird, dass eine Bewegung des Blockierkörpers aus der Blockierstellung nur in eine Richtung, nämlich in Richtung der Freigabestellung, ermöglicht wird. Insbesondere liegt ein axiales Ende des Blockierkörpers 8 zusammen mit einem axialen Ende der Führungshülse 4 in einer von dem Gehäuse 28 definierten Ebene. Durch das Gehäuse 28 wird also die Blockierstellung des Blockierkörpers 8 festgelegt. Die Grundplatte 6 weist ein axial durchgehendes Führungsloch 7 auf, durch welches sich der Freisetzungskörper 2 erstreckt. Der Freisetzungskörper 2 kann zumindest über eine bestimmte Strecke und in zumindest einer Richtung durch das Führungsloch 7 hindurchbewegt werden kann. Das Führungsloch 7 hat in der gezeigten Ausführungsform einen kleineren Innendurchmesser als die Führungshülse 4. Der Freisetzungskörper 2 ist mit der radial außerhalb der Tasche 18 liegenden Außenumfangsfläche in der Führungshülse 4 gelagert und mit der Außenumfangsfläche eines axial von der Tasche 18 beabstandeten Freisetzungskörperabschnitts in dem Führungsloch 7. Ferner wird die Bereitschaftsposition des Freisetzungskörpers 2 durch die Grundplatte 6 der Modulbasis festgelegt.

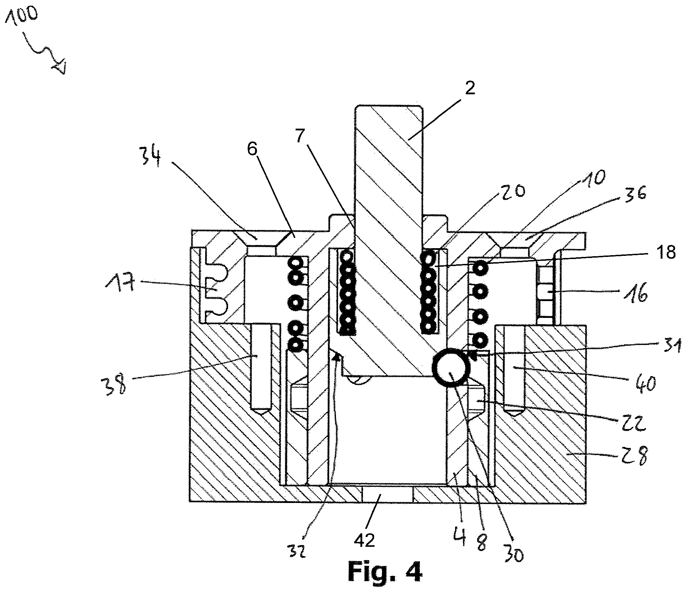

Fig. 4 zeigt ein Schnittbild des Aktuatormoduls 100 der Fig. 1 in einer orthogonal zu der Ebene A verlaufenden Ebene B. Die Ebene A und die Ebene B schneiden sich in der Führungshülsenachse. Es ist zu erkennen, dass der Freisetzungskörper 2 trotz der ersten Federvorspannung durch eine Sperrkugel 30 in der Bereitschaftsposition gehalten wird. Die Sperrkugel 30 ist in einem Durchgangsloch 31 der Führungshülse 4 angeordnet und erstreckt sich radial einwärts über die (radial gesehen innenliegende) Innenoberfläche der Führungshülse 4 hinaus. Das Durchgangsloch 31 erstreckt sich in radialer Richtung durch die Führungshülse 4. Der Freisetzungskörper 2 weist eine, beispielsweise radial umlaufende, Abschrägung 32 auf, welche in der Bereitschaftsposition des Freisetzungskörpers 2 auf der Sperrkugel 30 aufliegt. Durch das weitere Federelement 20 wird der Freisetzungskörper 2 in Richtung der Arbeitsposition vorgespannt, sodass die Abschrägung 32 auf die Sperrkugel 30 gedrückt wird. Somit wird die Sperrkugel 30 mit einer Kraft beaufschlagt, die zumindest teilweise radial nach außen wirkt. Allerdings ist eine Bewegung der Sperrkugel 30 radial nach außen in der dargestellten Konfiguration, also vor der Aktuierung des Aktuatormoduls 100, nicht möglich. Der Blockierkörper 8, der sich in der Blockierposition befindet, blockiert eine solche Bewegung der Sperrkugel 30 mit seiner Innenoberfläche, die an der Sperrkugel 30 anliegt. Die Sperrkugel ist beispielsweise aus V4A rostfreiem Stahl oder aus Keramik gefertigt.

Ferner ist zu erkennen, dass die Grundplatte weitere Aussparungen 34, 36 aufweist, welche fluchtend, beispielsweise axial fluchtend, zu Ausnehmungen 38, 40 des Gehäuses 28 angeordnet sind. Es können Schrauben oder andere Befestigungsmittel durch die Aussparungen 34, 36 in die Ausnehmungen 38, 40 des Gehäuses eingebracht werden, um das Gehäuse 28 an der Modulbasis zu befestigen. Die Aussparungen 34, 36 und die Ausnehmungen 38, 40 sind radial einwärts neben dem Befestigungselement 16 bzw. 17 angeordnet, liegen also in axialer Draufsicht jeweils auf einer die Ecke des Grundrisses der Grundplatte 6, an welcher Ecke ein Befestigungselement 16 bzw. 17 vorgesehen ist, und das Zentrum des Grundrisses verbindenden Gerade. Der Aktuatordraht 12 bzw. 13 verläuft in einer axialen Draufsicht radial gesehen außerhalb der Aussparungen 34, 36 und der Ausnehmungen 38, 40. Hierdurch kann sichergestellt werden, dass der Aktuatordraht 12 in die Aussparungen 34, 36 und die Ausnehmungen 38, 40 eingeführte Schrauben nicht berührt. Dadurch kann die Kompaktheit des Aktuatormoduls 100 weiter erhöht werden.

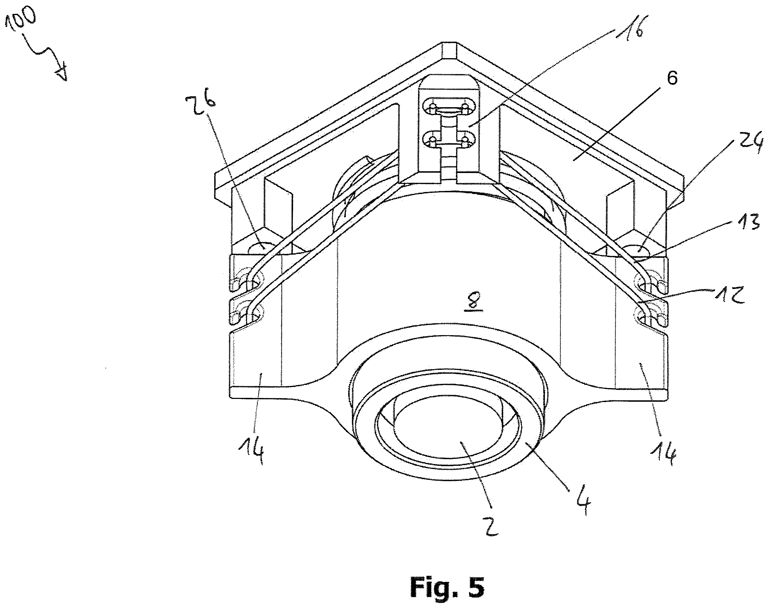

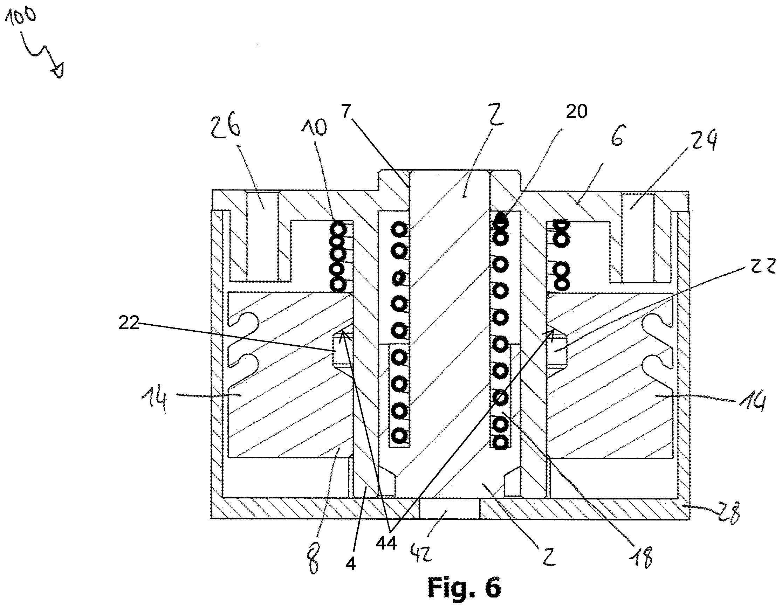

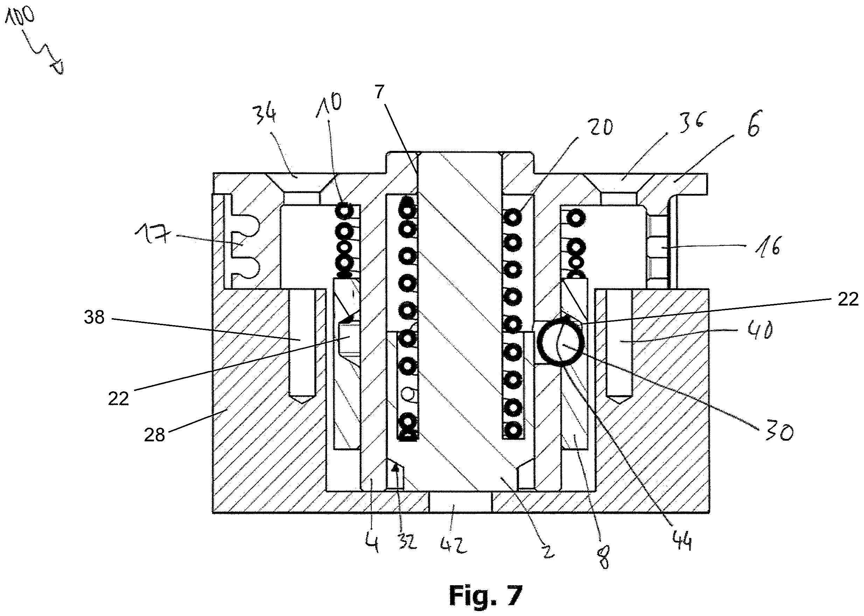

Fig. 5 zeigt eine perspektivische Ansicht des Aktuatormoduls 100 nach der Aktuierung. Zur Aktuierung wird der Aktuatordraht 12 bzw. der weitere Aktuatordraht 13 erhitzt, wodurch sich der jeweilige Aktuatordraht in seiner Längsrichtung zusammenzieht. Aufgrund der Befestigung des Aktuatordrahts 12 bzw. 13 an der Modulbasis und an dem Blockierkörper 8, sowie aufgrund des gezeigten Drahtverlaufs, wird bei der Aktuierung der Blockierkörper 8 axial aus seiner Blockierstellung in die Freigabestellung bewegt. Wie nachfolgend unter Bezugnahme auf die Fig. 6 und 7 näher erläutert wird, kommt es hierdurch zu einer Bewegung des Freisetzungskörpers 2 von der Bereitschaftsposition in die Arbeitsposition.

Fig. 6 zeigt das Arbeitsmodul 100 nach der Aktuierung in Form eines Schnittbilds in der Ebene A. Der Freisetzungskörper 2 steht in dieser Konfiguration nicht mehr auf der der Führungshülse 4 abgewandten Seite der Grundplatte 6 über. Stattdessen ist der Freisetzungskörper 2 vollständig in die Führungshülse 4 zurückgezogen. Während das Federelement 10 in der Blockierstellung des Blockierkörpers 8 weniger stark komprimiert ist als in der Freigabestellung des Blockierkörpers 8, ist das weitere Federelement 20 in der Bereitschaftsposition des Freisetzungskörpers 2 stärker komprimiert als in der Arbeitsposition des Freisetzungskörpers 2. In anderen Worten wird zur Aktuierung der Blockierkörper 8 gegen die zweite Federvorspannung des Federelements 10 von der Blockierstellung die Freigabestellung bewegt, wodurch der Freisetzungskörper 2 freigegeben wird und sich von der ersten Federvorspannung des weiteren Federelement 20 getrieben aus der Bereitschaftsposition in die Arbeitsposition bewegt.

Fig. 7 zeigt ein Schnittbild in der Ebene B des Arbeitsmoduls 100 nach der Aktuierung. Es ist zu erkennen, dass die in der Durchgangsbohrung 31 angeordnete Sperrkugel 30 gegenüber der in Fig. 4 gezeigten Konfiguration radial weiter außen liegt. Die Sperrkugel 30 steht nun nicht mehr radial einwärts über die Innenumfangsfläche der Führungshülse 4 über. Stattdessen steht die Sperrkugel 30 radial auswärts über die Außenumfangsfläche der Führungshülse 4 über. Die Verschiebung der Sperrkugel 30 radial auswärts wird durch die Aussparung 22 in dem Blockierkörper 8 ermöglicht. Die Aussparung 22 ist so ausgebildet, dass sie die Sperrkugel 30 zumindest teilweise aufnehmen kann. Bei der Bewegung des Blockierkörpers aus der Blockierstellung in die Freigabestellung wird die Aussparung 22 relativ zu der Sperrkugel 30 verschoben, sodass die Sperrkugel 30 nur in der Freigabestellung des Blockierkörpers 8 in die Aussparung 22 eindringen kann. Die Sperrkugel 30 wird von der Abschrägung 32 des Freisetzungskörper 2 radial auswärts gedrückt und bewegt sich daher bei der Bewegung des Blockierkörpers 8 in dessen Freigabestellung in die Aussparung 22. Hierdurch wird der Bewegungsweg des Freisetzungskörpers 2 in axialer Richtung freigegeben, sodass sich dieser von dem weiteren Federelement 20 getrieben in die Arbeitsposition bewegen kann.

Nach der Aktuierung wird der Blockierkörper 8 von dem Federelement 10 in Richtung der Blockierstellung vorgespannt. Allerdings ist die Bewegung des Blockierkörpers 8 aus der Freigabestellung in Richtung der Blockierstellung nicht möglich, da die Sperrkugel 30 eine solche Bewegung blockiert. Die Sperrkugel 30 wird durch das erste Federelement 10 über eine Abschrägung 44 des Blockierkörpers 8, die an der Aussparung 22 angeordnet ist, radial nach innen gedrückt. Die Sperrkugel 30 kann sich jedoch nicht radial nach innen bewegen, da sie in der Arbeitsposition des Freisetzungskörpers 2 von einer Außenumfangsfläche des Freisetzungskörpers 2, insbesondere von einer Taschenwand der Tasche 18, blockiert wird.

Wird nun der Freisetzungskörper 2 manuell zurück in seine Bereitschaftsposition gedrückt, kann sich die Sperrkugel 30 wieder radial nach innen bewegen, sodass sie an der Abschrägung 32 des Freisetzungskörpers 2 anliegt. Durch diese Bewegung der Sperrkugel wird der Blockierkörper 8 freigegeben, sodass dieser von dem Federelement 10 zurück in die Blockierstellung bewegt wird.

Ferner zu erkennen ist ein Durchgangsloch 42, welches in dem Gehäuse 28 an einem axialen Ende des Freisetzungskörpers 2 in der Arbeitsposition angeordnet ist. Der Freisetzungskörpers 2 kann durch das Einführen eines passenden Werkzeugs durch das Durchgangsloch 42 in seine Bereitschaftsposition zurückgeschoben werden, wodurch ein einfacher Reset des Aktuatormoduls 100 ermöglicht wird.

Selbstverständlich können anstelle einer Sperrkugel auch mehrere Sperrkugeln oder Sperrzapfen verwendet werden. Hierzu können mehrere Durchgangslöcher 31, die vorzugsweise in Umfangsrichtung der Lagerhülse 2 gleichverteilt angeordnet sind, vorgesehen sein. Auch die Anzahl der Befestigungselemente 17 und der Drahtführungsformationen 14 ist nicht auf zwei begrenzt. In der gezeigten Ausführungsform des Aktuatormoduls 100 ist die Bewegungsrichtung des Blockierkörpers 8 von der Blockierstellung in die Freigabestellung gegenläufig zu der der Bewegungsrichtung des Freisetzungskörpers 2 von der Bereitschaftsposition in die Arbeitsposition. Auch Bewegungen in derselben Richtung können bei entsprechender Auslegung des Gehäuses 28 und des Freisetzungskörpers 2 ermöglicht werden.

Beispielsweise sind der Blockierkörper 8, die Modulbasis mit der Führungshülse 4 und/oder der Freisetzungskörper 2 mittels eines additiven Fertigungsverfahrens, beispielsweise 3D-Druck oder Lasersintern hergestellt. Der Blockierkörper 8, die Modulbasis mit der Führungshülse 4 und/oder der Freisetzungskörper 2 können aus 316L rostfreiem Stahl bestehen.

Eine Kante des Umrisses der im Wesentlichen quadratischen Grundplatte 6 hat in einem Beispiel eine Länge von etwa 17 mm. Der Arbeitsweg, den der Freisetzungskörper 2 zwischen der Bereitschaftsposition und der Arbeitsposition zurücklegt, kann etwa 6.5 mm betragen. Hingegen kann der zur Aktuierung benötigte Stellweg, also der Weg, den der Blockierkörper 8 zwischen der Blockierstellung und der Freigabestellung zurücklegt, kleiner sein als der Arbeitsweg und beispielsweise etwa 1.2 mm betragen. Der über die der Führungshülse 6 gegenüberliegenden Seite der Grundplatte 6 herausstehende Teil des Freisetzungskörpers 2 kann einen Durchmesser von etwa 4 mm aufweisen. Auch weitere beispielhafte Dimensionen lassen sich anhand dieser Maße den Figuren entnehmen.

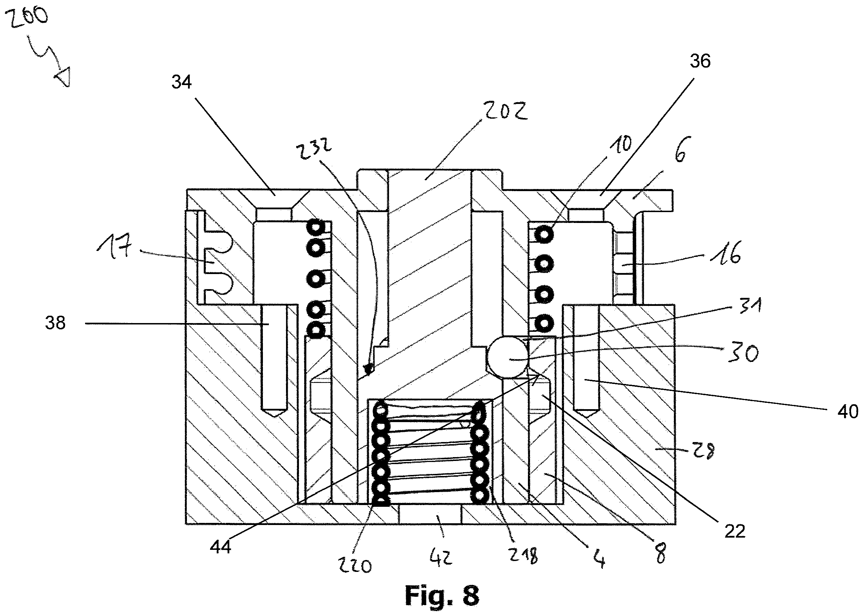

Fig. 8 zeigt ein Schnittbild eines Aktuatormoduls 200 vor der Aktuierung. Das Aktuatormodul 200 unterscheidet sich von dem Aktuatormodul 100 (siehe Fig. 4) lediglich durch die Ausgestaltung des Freisetzungskörpers 2 und des weiteren Federelements 20. Anstelle des Freisetzungskörpers 2 und des weiteren Federelements 20 umfasst das Aktuatormodul 200 einen Freisetzungskörper 202 und ein weiteres Federelement 220. Die Funktionsweise der Abschrägung 232 und der Außenumfangswand des Freisetzungskörpers 202 entspricht der Funktionsweise der Abschrägung 32 und der Außenumfangswand des Freisetzungskörpers 2. Es ist zu erkennen, dass der Freisetzungskörper 202 in der Bereitschaftsposition in die Führungshülse 4 zurückgezogen ist. In der Arbeitsposition steht der Freisetzungskörper 202 auf der der Führungshülse 4 gegenüberliegenden Seite der Grundplatte 6 über. Daher kann das Aktuatormodul 200 auch als "Pin pusher" bezeichnet werden.

Die Tasche 218 ist in Form einer Topftasche vorgesehen und hat eine axial verlaufende zylindrische Form. Alternativ ist auch eine Ringtasche möglich. Die Aussparung 42 ist für den Reset des Aktuatormoduls 200 nicht notwendig. Stattdessen kann der Freisetzungskörper 202 aus der Arbeitsposition manuell zurück in die Bereitschaftsposition in die Führungshülse 4 geschoben werden.

Die Bereitschaftsposition des Freisetzungskörpers 202 ist durch das Gehäuse 28 festgelegt, die Arbeitsposition durch die Grundplatte 6 der Modulbasis. Die Blockierstellung des Blockierkörpers 8 ist durch das Gehäuse 28 festgelegt.

In der gezeigten Ausführungsform entspricht die Bewegungsrichtung des Blockierkörpers 8 von der Blockierstellung in die Freigabestellung der Bewegungsrichtung des Freisetzungskörpers 202 von der Bereitschaftsposition in die Arbeitsposition. Auch eine gegensätzliche Bewegung kann bei entsprechender Auslegung des Gehäuses 28 und des Freisetzungskörpers 202 ermöglicht werden.

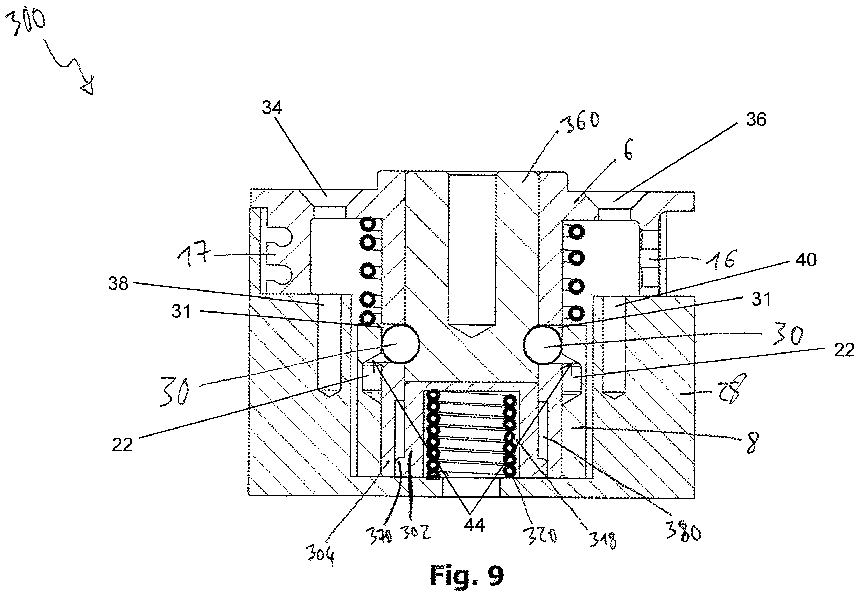

Fig. 9 zeigt ein Schnittbild in einer Ebene A eines Aktuatormoduls 300 vor der Aktuierung. Das Aktuatormodul 300 unterscheidet sich von dem Aktuatormodul 100 (siehe Fig. 4) lediglich durch die Ausgestaltung des Freisetzungskörpers 2, der Führungshülse 4 und des weiteren Federelements 20. Anstelle des Freisetzungskörpers 2 und des weiteren Federelements 20 umfasst das Aktuatormodul 200 einen Freisetzungskörper 202 und ein weiteres Federelement 220, anstelle der Führungshülse 4 eine Führungshülse 304. Es sind mehrere Sperrkugeln 30 vorgesehen, die in jeweils einer Durchgangsbohrung 31 gehalten werden und von einzelnen oder einer durchgängigen Aussparung 22 des Blockierkörpers 8 zumindest teilweise aufgenommen werden können. Die Durchgangsbohrungen 31 sind vorzugsweise in Umfangsrichtung der Führungshülse im Wesentlichen gleichmäßig verteilt.

Das Aktuatormodul umfasst neben dem Freisetzungskörper 302 eine Mutter 360. Die Mutter wird von den Sperrkugeln 30 gehalten und blockiert dadurch den Freisetzungskörper 302 in der Bereitschaftsposition. Die Mutter weist auf ihrer Außenumfangsoberfläche entsprechende Einkerbungen zur lediglich teilweisen Aufnahme der Sperrkugeln auf.

Der Freisetzungskörper 302 weist eine axial ausgeformte Tasche 318 in Form einer Topftasche auf. Stattdessen ist auch eine Ringtasche denkbar. In der Tasche 318 ist das weitere Federelement 320 angeordnet. Ferner weist der Freisetzungskörper 302 einen auf der Außenumfangsoberfläche des Freisetzungskörpers 302 angeordneten Anschlag 370 auf. Der Anschlag 370 ist beispielsweise ein radial umlaufender Vorsprung.

Die Führungshülse 302 unterscheidet sich von der Führungshülse 2 durch eine radial innenliegende Führungsaussparung 380, welche der Führung des Anschlags 370 dient. An einem axialen Ende der Führungsaussparung 380 steht die Innenumfangswand der Führungshülse 302 gegenüber der Führungsaussparung 380 radial nach innen vor. Somit kann sichergestellt werden, dass der Anschlag 370 des Freisetzungskörpers 302 an dem axialen Ende der Führungsaussparung 380 zurückgehalten wird. In anderen Worten wird eine maximale Bewegung des Freisetzungskörpers 302 in Richtung der Arbeitsposition durch die Führungshülse festgelegt. Hierdurch ist der Freisetzungskörper 302 verliersicher in das Aktuatormodul 300 eingebaut. Demgegenüber wird bei der Aktuation des Aktuatormoduls 300 die Mutter 360 komplett freigegeben, sodass sie aus der Führungshülse 304 entfernt werden kann. Vorzugsweise wird das weitere Federelement 320 so ausgelegt, dass die Mutter 360 bei der Aktuierung automatisch ausgestoßen wird. Die Mutter 360 kann daher auch als "Release nut" und das Aktuatormodul 300 als "Hold Down and Release Mechanism", HDRM, bezeichnet werden.

Die Arbeitsposition des Freisetzungskörpers 302 ist durch die Führungshülse 304 festgelegt, die Bereitschaftsposition durch das Gehäuse 28. Die Blockierstellung des Blockierkörpers 8 ist durch das Gehäuse 28 festgelegt.

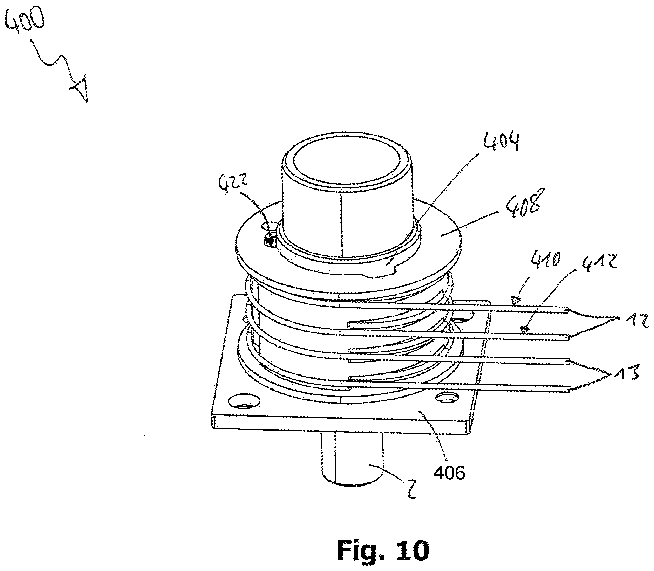

Fig. 10 zeigt eine perspektivische Ansicht eines nicht beanspruchten Aktuatormoduls 400. Hierbei ist der Blockierkörper 408 relativ zu der Führungshülse 404 um die Hülsenachse drehbar zwischen seiner Blockierstellung und seiner Freigabestellung beweglich angeordnet. Die Führungshülse 404 steht im Wesentlichen mittig von der Grundplatte 406 der Modulbasis in axialer Richtung auf. Der Aktuatordraht 12 umschlingt ausgehend von einem an eines seiner Drahtenden anschließenden Endabschnitt 410 die Führungshülse 404 in Umfangsrichtung bis zu einer an dem Blockierkörper gebildeten Drahtumlenkstelle, wird an der Drahtumlenkstelle umgelenkt und umschlingt dahinter die Führungshülse 404 in Umfangsrichtung gegenläufig bis zu einem an das andere seiner Drahtenden anschließenden Endabschnitt 412. Der Blockierkörper 8 umfasst mehrere axial verlaufende, sich bis zu einem axialen Ende des Blockierkörpers 8 erstreckende Aussparungen 422. Bei einer Drehung des Blockierkörpers aus der Blockierstellung in die Freigabestellung können die Sperrkugeln 30 von diesen Aussparungen 422 zumindest teilweise aufgenommen werden, sodass der Bewegungsweg des Freisetzungskörpers 2 freigegeben wird. In der gezeigten Darstellung verlaufen die Aktuatordrähte 12, 13 über den Umriss der Grundplatte 6 hinweg, was jedoch nicht notwendigerweise der Fall ist. Vorzugsweise sind die Drahtenden an derselben Ecke des Umrisses der Grundplatte 6 an der Modulbasis oder an einem mit der Modulbasis verbundenen Gehäuse befestigt. Das Gehäuse kann mittels an den Ecken des Umrisses angeordneten Befestigungsmitteln mit der Grundplatte 6 verbunden sein. Die Befestigungsmittel liegen somit radial auswärts von den Drahtabschnitten des Aktuatordrahts 12 bzw. 13.

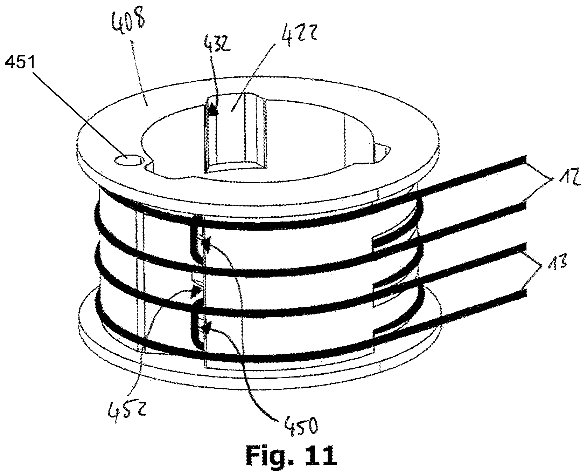

Fig. 11 zeigt den Blockierkörper 408 mit den Aktuatordrähten 12 und 13, die jeweils in axialer Draufsicht im Wesentlichen dem Verlauf einer Spirale folgen. Der Aktuatordraht 12 bzw. 13 ist an der Drahtumlenkstelle 450 umgelenkt. Die Drahtumlenkstelle liegt radial einwärts von der Außenumfangsfläche des Blockierkörpers. Der Aktuatordraht 12 bzw. 13 verläuft zumindest teilweise innerhalb eines radial einwärts von der Außenumfangsfläche in dem Blockierkörper 408 gebildeten Tunnels 452 bis zu der Drahtumlenkstelle 450. Der Aktuatordraht 12 bzw. 13 wird an der Drahtumlenkstelle 450 umgelenkt und in einem im Wesentlichen parallel zu dem Tunnel 452 verlaufenden Tunnel 453 in Umlaufrichtung entgegengesetzt zurückgeführt. Zwischen dem Tunnel 452 und dem Tunnel 453 kann eine Trennwand vorgesehen sein. Der Blockierkörper 408 weist eine axial eingebrachte Aussparung 451 auf.

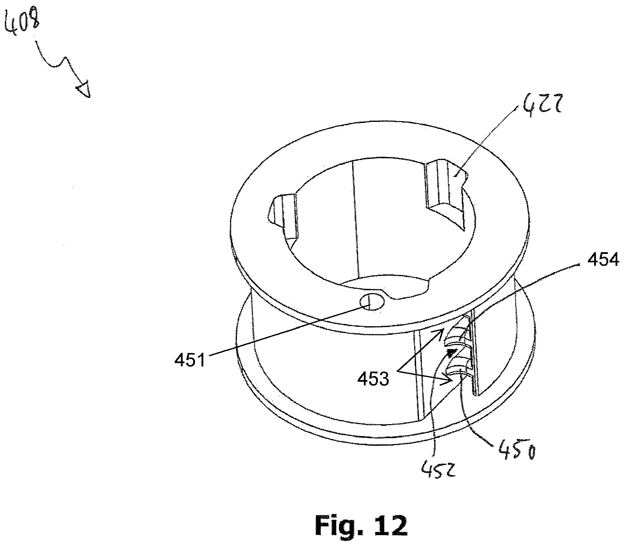

Fig. 12 zeigt den Blockierkörper 408 ohne den Aktuatordraht 12 bzw. 13. Es sind die Tunnel 452 und 453 zu erkennen, in welchen im zusammengebauten Zustand der Aktuatordraht 12 bzw. 13 bis zu der jeweiligen Drahtumlenkstelle 450 verläuft. Zwischen dem Tunnel 453 des Aktuatordrahts 12 und dem Tunnel 452 des Aktuatordrahts 13 ist eine Trennwand 454 vorgesehen.

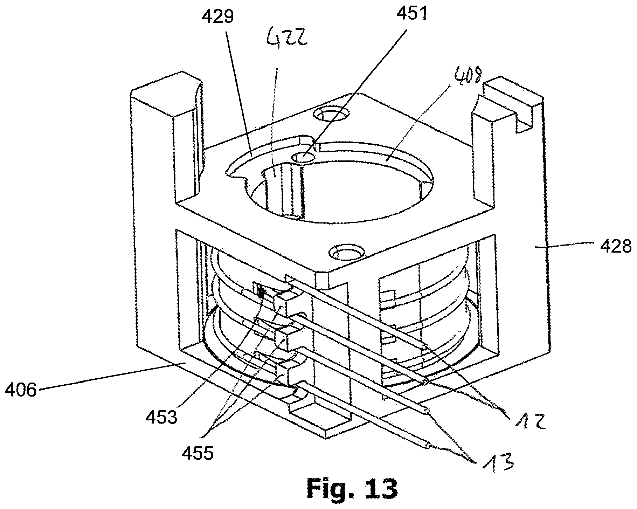

Fig. 13 zeigt den Blockierkörper 408 mit der Modulbasis 406 und dem Aktuatordraht 12 bzw. 13. Auch hier sind die Aktuatordrähte 12, 13 so dargestellt, dass sie sich über ein Befestigungselement 455 an der Modulbasis 406 hinaus erstrecken.

Vorzugsweise ist der Aktuatordraht 12 bzw. 13 einadrig ausgestaltet ist und im Bereich wenigstens eines seiner Drahtenden in das Aderbündel eines der elektrischen Versorgung des Aktuatordrahts 12 bzw. 13 dienenden Litzendrahts eingesteckt, wobei der Aktuatordraht 12 bzw. 13 mittels einer auf das Aderbündel aufgesetzten Klemmhülse mit dem Litzendraht zugkraftübertragend verklemmt ist. Die Klemmhülse liegt vorzugsweise an dem Befestigungselement 455 an.

Der Aktuatordraht 12 bzw. 13 kann stattdessen mit einer Klemmhülse verklemmt sein, die einstückig mit einem Anschlusspin gefertigt ist. Hierbei muss der Aktuatordraht im Bereich der Klemmverbindung nicht zwangsweise von einem Faser-oder Aderbündel umgeben seinn. Bei einer solchen Klemmhülse kann es sich um eine Klemmhülse mit der "Military Part Number" M39029/58 handeln, beispielsweise um einen "Standard Pin Crimp Contact for MIL-DTL-38999 Series I, II, III and IV Connectors" der Firma Gienair^{®}. Der Anschlusspin ermöglicht einen Anschluss an eine elektrische Steckplatine oder an einen elektrischen Kontaktstecker.

Ein vorzugsweise kastenförmiges Gehäuse 428 ist auf der Grundplatte 406 angeordnet und sorgt für eine Beschränkung der Bewegung des Blockierkörpers 408 in axialer Richtung. In der dazu entgegengesetzten axialen Richtung wird eine Bewegung des Blockierkörpers 408 von der Grundplatte 406 beschränkt. In dem Gehäuse ist eine Einkerbung 429 vorgesehen, welche axial oberhalb der Aussparung 451 liegt. Die Einkerbung 429 ist so ausgelegt, dass sie einen Eingriff in axialer Richtung in die Aussparung 451 erlaubt, unabhängig davon, ob sich der Blockierkörper 408 in der Blockierstellung, in der Freigabestellung oder dazwischen befindet. Zum Reset des Aktuatormoduls kann der Freisetzungskörper 2 manuell zurück in die Bereitschaftsposition bewegt werden. Unterstützend hierzu kann mittels eines in die Aussparung 451 eingeführten Werkzeugs ein Drehmoment auf den Blockierkörper 408 ausgeübt werden. Alternativ ist in der Aussparung 451 ein Zapfen befestigt, der dazu dient, durch Anschlagen an Endbereichen der Aussparung 451 einen Rotationsbewegungsbereich des Blockierkörpers 408 um die axiale Achse festzulegen. Somit wird hier der Rotationsbewegungsbereich des Blockierkörpers 428 durch das Gehäuse 428 festgelegt.

Der Zapfen kann das Endstück einer Torsionsfeder sein oder mit einer Torsionsfeder verbunden sein, sodass die Torsionsfeder relativ zu der Führungshülse 404 auf den Blockierkörper 408 eine Torsionskraft ausübt. In anderen Worten stellt diese Torsionsfeder die zweite Federvorspannkraft auf den Blockierkörper 408 bereit. Bei dem Aktuatormodul 400 wird also anstelle einer Druckfeder 10 eine Torsionsfeder eingesetzt.

Weitere vorteilhafte Ausgestaltungen sind den Figuren zu entnehmen. Auch können einzelne Merkmale der Aktuatormodule 100, 200, 300 und 400 in vorteilhafter Weise mit einander kombiniert werden, ohne die Funktionsfähigkeit zu beeinträchtigen. So kann beispielsweise anstelle des Freisetzungskörpers 2 in dem Aktuatormodul 400 der Freisetzungskörper 202 oder 302 verwendet werden. Anstelle der Führungshülse 4 kann die Führungshülse 304 verwendet werden, vorzugsweise in Kombination mit dem Freisetzungskörper 302.

Wie oben erwähnt ist das beschriebene Aktuatormodul 100, 200, 300 und 400 zur Freisetzung einer Ausrüstungskomponente eines Satelliten oder einer Rakete eingerichtet. Es kann aber auch zur Freisetzung anderer Ausrüstungskomponenten eingerichtet sein, beispielsweise zur Freisetzung von Ausrüstungskomponenten eines unbemannten Luftfahrzeugs wie einer Drohne oder zur Freisetzung von Ausrüstungskomponenten eines bemannten Luftfahrzeugs, insbesondere eines (Leicht-)Flugzeugs. In einer Ausgestaltung handelt es sich bei der Ausrüstungskomponente um einen Satelliten, der von einer sub- oder orbitalen Plattform, beispielsweise von einer Rakete, freigesetzt werden soll. Bei all diesen Einsatzarten sind eine geringe Baugröße, ein geringes Gewicht, eine zuverlässige Blockierung und Freisetzung des Freisetzungskörpers, ein großer Arbeitsweg des Freisetzungskörpers, und eine hohe Vorschub- bzw. Rückzugskraft des Freisetzungskörpers bei der Aktuierung von Vorteil.

## Patentansprüche

1. Aktuatormodul (100; 200; 300) zur Freisetzung einer Ausrüstungskomponente, umfassend:
eine Modulbasis, wobei die Modulbasis eine Führungshülse (4; 304) bildet;
einen zur Kopplung mit der Ausrüstungskomponente vorgesehenen, in die Führungshülse eingesetzten Freisetzungskörper (2; 202; 302), welcher relativ zu der Führungshülse (4; 304) längs einer Hülsenachse derselben aus einer Bereitschaftsposition in eine Arbeitsposition beweglich angeordnet ist, wobei der Freisetzungskörper durch Überführung aus der Bereitschafts- in die Arbeitsposition eine Freisetzung der Ausrüstungskomponente zu bewirken vermag und wobei das Aktuatormodul (100; 200; 300) so ausgelegt ist, dass der Freisetzungskörper (2; 202; 302) in der Bereitschaftsposition unter der Wirkung einer den Freisetzungskörper (2; 202; 302) in Richtung auf die Arbeitsposition drängenden ersten Federvorspannung steht;
einen auf die Führungshülse (4; 304) aufgesetzten, relativ zu dieser zwischen einer Blockierstellung und einer Freigabestellung beweglichen Blockierkörper (8), welcher in seiner Blockierstellung eine Blockierung des Freisetzungskörpers (2; 202; 302) gegen Bewegung aus der Bereitschaftsposition in die Arbeitsposition bewirkt und in seiner Freigabestellung eine Bewegung des Freisetzungskörpers (2; 202; 302) aus der Bereitschaftsposition in die Arbeitsposition gestattet, wobei das Aktuatormodul (100; 200; 300) so ausgelegt ist, dass der Blockierkörper (8) in seiner Blockierstellung unter der Wirkung einer zweiten Federvorspannung steht, welche den Blockierkörper (4) in Richtung aus der Freigabestellung hin zu der Blockierstellung drängt; und
eine Aktuatoreinrichtung zur Bewegung des Blockierkörpers (4) aus der Blockierstellung in die Freigabestellung, wobei die Aktuatoreinrichtung mindestens einen mit beiden Drahtenden an der Modulbasis festgelegten, mit dem Blockierkörper für die Aufbringung einer der zweiten Federvorspannung entgegenwirkenden Aktivierungskraft gekoppelten Aktuatordraht (12; 13) aus einem Formgedächtnismaterial umfasst,
wobei der Blockierkörper (8; 408) relativ zu der Führungshülse (4; 304) axial zwischen seiner Blockierstellung und seiner Freigabestellung beweglich angeordnet ist und dass der Aktuatordraht (12; 13) mit einem axialen Auf- und Ab um die Führungshülse (4; 304) herum geführt ist, wobei der Aktuatordraht (12; 13) an dem Blockierkörper (8) und der Modulbasis abgestützt ist.

2. Aktuatormodul nach Anspruch 1, wobei der Aktuatordraht (12; 13) mit einem mehrfachen axialen Auf- und Ab um die Führungshülse (4; 304) herum geführt ist, wobei der Aktuatordraht (12; 13) an dem Blockierkörper (8; 308) und der Modulbasis abgestützt ist.

3. Aktuatormodul nach Anspruch 2, wobei der Aktuatordraht (12; 13) abwechselnd an dem Blockierkörper (8; 308) und der Modulbasis abgestützt ist.

4. Aktuatormodul nach einem der Ansprüche 1 bis 3, wobei der Aktuatordraht um den auf die Führungshülse aufgesetzten Blockierkörper herum geführt ist.

5. Aktuatormodul nach einem der Ansprüche 1 bis 4, wobei der Aktuatordraht in Bezug auf eine Bewegungsrichtung des Blockierkörpers zumindest teilweise schräg verläuft.

6. Aktuatormodul nach einem der Ansprüche 1 bis 5, wobei der Aktuatordraht mehrere im Wesentlichen geradlinige, an einander anschließende Abschnitte umfasst, wobei jeder dieser Abschnitte schräg zu der Bewegungsrichtung des Blockierkörpers verläuft.

7. Aktuatormodul nach einem der Ansprüche 1 bis 6, wobei der Blockierkörper (8; 308) eine Mehrzahl von mindestens und vorzugsweise insgesamt zwei in Umfangsrichtung im wesentlichen gleichverteilt angeordneten Drahtführungsformationen (14) für den Aktuatordraht aufweist.

8. Aktuatormodul nach Anspruch 7, wobei der Aktuatordraht in Umfangsrichtung beidseits jeder der Drahtführungsformationen (14) zu axial tiefer an der Modulbasis gelegenen Drahtabstützstellen absteigt.

9. Aktuatormodul nach Anspruch 8, wobei der Aktuatordraht in Umfangsrichtung beidseits jeder der Drahtführungsformationen schräg in Bezug auf die axiale Richtung und/oder in Bezug auf eine Bewegungsrichtung des Blockierkörpers zu den axial tiefer an der Modulbasis gelegenen Drahtabstützstellen absteigt.

10. Aktuatormodul nach einem der Ansprüche 1 bis 9, wobei in einer axialen Draufsicht der Aktuatordraht (12; 13) im Wesentlichen den Kanten eines Polygons folgt.

11. Aktuatormodul nach Anspruch 10, wobei das Polygon ein konvexes und/oder gleichseitiges Polygon ist.

12. Aktuatormodul nach Anspruch 11, wobei das Polygon eine Raute oder ein Quadrat ist.

13. Aktuatormodul nach einem der Ansprüche 10 bis 12, wobei Stellen des Aktuatordrahts, die an benachbarten, von derselben Kante gebildeten Ecken des Polygons liegen, zumindest axial voneinander beabstandet sind.

14. Aktuatormodul nach einem der vorhergehenden Ansprüche, wobei die Modulbasis eine Grundplatte (6) mit zumindest angenähert polygonförmigem Umriss umfasst, von welcher die Führungshülse (4; 304) aufsteht, und wobei mindestens eines der Drahtenden des Aktuatordrahts (12; 13) in axialer Draufsicht im Bereich einer der Ecken des Umrisses an der Modulbasis festgelegt ist.

15. Aktuatormodul nach einem der vorhergehenden Ansprüche, ferner umfassend eine Sperrkugel (30), wobei in der Hülsenwand der Führungshülse (4; 304) ein Durchgangsloch (31) für die Sperrkugel (30) gebildet ist, welche in der Blockierstellung des Blockierkörpers (8) radial einwärts über die Innenumfangsfläche der Führungshülse (4; 304) hinaussteht, um den Freisetzungskörper gegen Bewegung aus der Bereitschaftsposition in die Arbeitsposition zu blockieren, wobei in der Freigabestellung des Blockierkörpers (8) die Sperrkugel (30) für eine Verlagerung aus dem axialen Bewegungsbereich des Freisetzungskörpers heraus freigegeben ist und wobei der Freisetzungskörper (2; 202; 302) mit einer axialen Tasche (18; 218; 318) ausgeführt ist, in welche ein zur Erzeugung der ersten Federvorspannung dienendes Federelement (10; 210; 310) eingesetzt ist, wobei der Freisetzungskörper (2; 202; 302) in seiner Arbeitsposition mit der radial äußeren Taschenwand der Tasche (18; 218; 318) radial vor der Sperrkugel (30) liegt.

## Claims

1. An actuator module (100; 200; 300) for releasing an equipment component, comprising:
a module base, the module base forming a guide sleeve (4; 304);
a release body (2; 202; 302) provided for coupling with the equipment component and inserted into the guide sleeve, which release body is arranged movably relative to the guide sleeve (4; 304) along a sleeve axis thereof from a standby position to a working position, wherein the release body is capable of effecting a release of the equipment component by transfer from the standby position to the working position, and wherein the actuator module (100; 200; 300) is configured such that the release body (2; 202; 302), in the standby position, is under the action of a first spring bias which urges the release body (2; 202; 302) towards the working position;
a blocking body (8) mounted on the guide sleeve (4; 304) and movable relative thereto between a blocking position and a release position, which, in its blocking position, effects a blocking of the release body (2; 202; 302) against movement from the standby position into the working position and, in its release position, allows movement of the release body (2; 202; 302) from the standby position into the working position, wherein the actuator module (100; 200; 300) is configured such that the blocking body (8), in its blocking position, is under the action of a second spring bias which urges the blocking body (4) in the direction from the release position towards the blocking position; and
an actuator unit for moving the blocking body (4) from the blocking position to the release position, the actuator unit comprising at least one actuator wire (12; 13), made of a shape memory material and fixed with both wire ends to the module base and coupled to the blocking body, for applying an activation force counteracting the second spring preload,
wherein the blocking body (8; 408) is arranged axially movable relative to the guide sleeve (4; 304) between its blocking position and its release position and that the actuator wire (12; 13) is guided with an axial up and down around the guide sleeve (4; 304), wherein the actuator wire (12; 13) is supported on the blocking body (8) and the module base.

2. Actuator module according to claim 1, wherein the actuator wire (12; 13) is guided with a multiple axial up and down around the guide sleeve (4; 304), wherein the actuator wire (12; 13) is supported on the blocking body (8; 308) and the module base.

3. Actuator module according to claim 2, wherein the actuator wire (12; 13) is alternately supported on the blocking body (8; 308) and the module base.

4. Actuator module according to one of claims 1 to 3, wherein the actuator wire is guided around the blocking body mounted on the guide sleeve.

5. Actuator module according to any one of claims 1 to 4, wherein the actuator wire extends at least partially obliquely with respect to a direction of movement of the blocking body.

6. Actuator module according to any one of claims 1 to 5, wherein the actuator wire comprises a plurality of substantially straight sections adjoining each other, each of said sections being oblique with respect to the direction of movement of the blocking body.

7. actuator module according to any one of claims 1 to 6, wherein the blocking body (8; 308) comprises a plurality of at least and preferably a total of two wire guide formations (14) for the actuator wire arranged substantially equally distributed in the circumferential direction.

8. Actuator module according to claim 7, wherein the actuator wire descends in the circumferential direction on both sides of each of the wire guide formations (14) to wire support points located axially lower on the module base.

9. Actuator module according to claim 8, wherein the actuator wire descends in the circumferential direction on both sides of each of the wire guide formations obliquely with respect to the axial direction and/or with respect to a direction of movement of the blocking body to the wire support points located axially lower on the module base.

10. Actuator module according to any one of claims 1 to 9, wherein in an axial plan view the actuator wire (12; 13) substantially follows the edges of a polygon.

11. Actuator module according to claim 10, wherein the polygon is a convex and/or equilateral polygon.

12. Actuator module according to claim 11, wherein the polygon is a rhombus or a square.

13. Actuator module according to any one of claims 10 to 12, wherein locations of the actuator wire located at adjacent corners of the polygon formed by the same edge are at least axially spaced apart.

14. Actuator module according to one of the preceding claims, wherein the module base comprises a base plate (6) with an at least approximately polygon-shaped outline, from which the guide sleeve (4; 304) protrudes, and wherein at least one of the wire ends of the actuator wire (12; 13) is fixed to the module base in axial plan view in the region of one of the corners of the outline.

15. Actuator module according to one of the preceding claims, further comprising a locking ball (30), wherein a through hole (31) is formed in the sleeve wall of the guide sleeve (4; 304), for the locking ball (30) which, in the blocking position of the blocking body (8) projects radially inwards beyond the inner circumferential surface of the guide sleeve (4; 304) to block the release body against movement from the standby position into the working position, wherein, in the release position of the blocking body (8), the locking ball (30) is released for displacement out of the axial range of movement of the release body and wherein the release body (2; 202; 302) is configured with an axial pocket (18; 218; 318) into which a spring element (10; 210; 310) serving to generate the first spring preload is inserted, wherein the release body (2; 202; 302), in its working position, lies with the radially outer pocket wall of the pocket (18; 218; 318) radially in front of the locking ball (30).

## Revendications

1. Module d'actionneur (100; 200; 300) servant à libérer un composant d'équipement, comprenant:
une base de module, la base de module formant une douille de guidage (4; 304);
un corps de libération (2; 202; 302) destiné à s'accoupler au composant d'équipement, inséré dans la douille de guidage, lequel est disposé de manière mobile par rapport à la douille de guidage (4; 304) le long de son axe de douille d'une position d'attente à une position de travail, le corps de libération étant apte à provoquer une libération du composant d'équipement lorsqu'il passe de la position d'attente dans la position de travail et le module d'actionneur (100; 200; 300) étant conçu de telle sorte que le corps de libération (2; 202; 302) est, dans la position d'attente, sous l'effet d'une première précontrainte de ressort poussant le corps de libération (2; 202; 302) en direction de la position de travail;
un corps de blocage (8) placé sur la douille de guidage (4; 304) et pouvant se déplacer par rapport à celle-ci entre une position de blocage et une position de libération, qui, dans sa position de blocage, provoque un blocage du corps de libération (2; 202; 302) pour l'empêcher de passer de la position d'attente à la position de travail et qui, dans sa position de libération, permet au corps de libération (2; 202; 302) de se déplacer de la position d'attente à la position de travail, le module d'actionneur (100; 200; 300) étant conçu de telle sorte que le corps de blocage (8), dans sa position de blocage, est soumis à l'effet d'une deuxième précontrainte de ressort qui pousse le corps de blocage (4) dans la direction allant de la position de libération à la position de blocage; et
un dispositif d'actionnement pour déplacer le corps de blocage (4) de la position de blocage à la position de libération, le dispositif d'actionnement comprenant au moins un fil d'actionneur (12; 13) en matériau à mémoire de forme, fixé par ses deux extrémités de fil à la base du module et couplé au corps de blocage pour appliquer une force d'activation s'opposant à la deuxième précontrainte de ressort,
dans lequel le corps de blocage (8; 408) est disposé de manière mobile axialement par rapport à la douille de guidage (4; 304) entre sa position de blocage et sa position de libération, et le fil d'actionneur (12; 13) est guidé par un mouvement axial de va et vient autour de la douille de guidage (4; 304), le fil d'actionneur (12; 13) étant supporté sur le corps de blocage (8) et la base du module.

2. Module d'actionneur selon la revendication 1, dans lequel le fil d'actionneur (12; 13) est guidé autour du manchon de guidage (4 ; 304) par de multiples mouvements de va et vient, le fil d'actionneur (12; 13) étant supporté sur le corps de blocage (8; 308) et la base du module.

3. Module d'actionneur selon la revendication 2, dans lequel le fil d'actionneur (12; 13) est supporté alternativement sur le corps de blocage (8; 308) et sur la base de module.

4. Module d'actionneur selon l'une quelconque des revendications 1 à 3, dans lequel le fil de l'actionneur est guidé autour du corps de blocage placé sur la douille de guidage.

5. Module d'actionneur selon l'une quelconque des revendications 1 à 4, dans lequel le fil d'actionneur est au moins partiellement incliné par rapport à une direction de déplacement du corps de blocage.

6. Module d'actionneur selon l'une quelconque des revendications 1 à 5, dans lequel le fil d'actionneur comprend une pluralité de sections sensiblement rectilignes se raccordant les unes aux autres, chacune de ces sections étant oblique par rapport à la direction de déplacement du corps de blocage.

7. Module d'actionneur selon l'une quelconque des revendications 1 à 6, dans lequel le corps de blocage (8; 308) présente une pluralité d'au moins et de préférence au total deux formations de guidage de fil (14) pour le fil d'actionneur, disposées essentiellement à intervalles réguliers dans la direction périphérique.

8. Module d'actionneur selon la revendication 7, dans lequel le fil d'actionneur descend dans la direction circonférentielle de part et d'autre de chacune des formations de guidage de fil (14) vers des emplacements de support de fil situés axialement plus bas sur la base du module.

9. Module d'actionneur selon la revendication 8, dans lequel le fil d'actionneur descend dans la direction circonférentielle de part et d'autre de chacune des formations de guidage de fil, obliquement par rapport à la direction axiale et/ou par rapport à une direction de déplacement du corps de blocage, vers les emplacements de support de fil situés axialement plus bas sur la base du module.

10. Module d'actionneur selon l'une quelconque des revendications 1 à 9, dans lequel dans une vue de dessus axiale, le fil d'actionneur (12; 13) suit sensiblement les bords d'un polygone.

11. Module d'actionneur selon la revendication 10, dans lequel le polygone est un polygone convexe et/ou équilatéral.

12. Module d'actionneur selon la revendication 11, dans lequel le polygone est un losange ou un carré.

13. Module d'actionneur selon l'une quelconque des revendications 10 à 12, dans lequel des emplacements du fil d'actionneur situés à des coins adjacents du polygone formés par la même arête sont espacés au moins axialement les uns des autres.

14. Module d'actionneur selon l'une quelconque des revendications précédentes, dans lequel la base du module comprend une plaque de base (6) dont le contour est au moins approximativement polygonal, à partir de laquelle la douille de guidage (4; 304) se dresse, et dans lequel au moins l'une des extrémités de fil du fil d'actionneur (12; 13) est fixée à la base du module dans la zone de l'un des coins du contour en vue de dessus axiale.

15. Module d'actionneur selon l'une quelconque des revendications précédentes, comprenant en outre une bille de blocage (30), un trou de passage (31) formé dans la paroi de douille de la douille de guidage (4; 304) pour la bille de blocage (30) qui, dans la position de blocage du corps de blocage (8), dépasse radialement vers l'intérieur de la surface périphérique intérieure de la douille de guidage (4; 304) pour bloquer le corps de libération contre tout mouvement de la position d'attente à la position de travail, dans lequel, dans la position de libération du corps de blocage (8), la bille de blocage (30) est libérée pour un déplacement hors de la plage de mouvement axial du corps de libération et dans lequel le corps de libération (2; 202; 302) est réalisé avec une poche axiale (18; 218; 318) dans laquelle est inséré un élément de ressort (10; 210; 310) servant à générer la première précontrainte de ressort, le corps de libération (2; 202; 302) se trouvant dans sa position de travail, la paroi de poche radialement extérieure de la poche (18; 218; 318) se trouvant radialement devant la bille de blocage (30).
